# EUROPÄISCHE PATENTSCHRIFT

(11) **EP 2 918 888 B1**
(45) Veröffentlichungstag und Bekanntmachung des Hinweises auf die Patenterteilung: **20.12.2017**
(21) Anmeldenummer: 15150552.6
(22) Anmeldetag: 09.01.2015
(51) Int. Cl.: F16L 33/08

(54) **SCHELLENANORDNUNG ZUR BEFESTIGUNG EINES SCHLAUCHES AUF EINEM ROHR ODER STUTZEN**
CLAMP ASSEMBLY FOR CONNECTING A HOSE TO A PIPE OR FITTING
COLLIER DE FIXATION DE TUYAU SUR UN TUBE OU MANCHON

(30) Priorität: 11.03.2014 DE 102014204458
(43) Veröffentlichungstag der Anmeldung: 16.09.2015
(73) Patentinhaber: ContiTech MGW GmbH, 34346 Hannoversch-Münden (DE)
(72) Erfinder: Brill, Hartmut, 37242 Bad Sooden-Allendorf (DE)
(74) Vertreter: Finger, Karsten

(56) Entgegenhaltungen:
- DE-A1-102004 045 993
- US-A- 5 261 145

## Beschreibung

Die Erfindung betrifft eine Schellenanordnung zur Befestigung eines Schlauches auf einem Rohr oder einem Stutzen, umfassend eine Schelle mit einem ringförmigen Schellenband und einer Schellenbandspanneinheit, wobei die Schelle eine Aufnahmeöffnung für den Schlauch und das Rohr bzw. den Stutzen bildet, und mehrere über einen Umfang des Schellenbands verteilte Federn, die vom Schellenband in die Aufnahmeöffnung ragen und in Radialrichtung des Schellenbands federwirkend sind, wobei die Federn durch Laschen gebildet sind.

Die Erfindung betrifft außerdem eine Verbindungsanordnung, umfassend ein Rohr oder einen Stutzen mit einem Rohr- bzw. Stutzenendabschnitt und einen Schlauch mit einem Schlauchendabschnitt, wobei der Schlauchendabschnitt auf den Rohr- bzw. Stutzenendabschnitt aufgesteckt ist und mit der zuvor genannten Schellenanordnung befestigt ist.

Derartige Schellenanordnungen sind aus dem Stand der Technik bekannt. Bei der zugehörigen Schelle handelt es sich beispielsweise um eine Schneckengewindeschelle. Das zugehörige Schellenband ist vorzugswiese aus Metall. Es kann aber auch aus einem anderen geeigneten Material, wie Kunststoff, hergestellt sein. Das Schellenband ist ringförmig ausgestaltet, so dass eine Aufnahmeöffnung des Schellenbands beziehungsweise. der Schelle entsteht, wobei die Schelle mit der Aufnahmeöffnung über den Schlauch geschoben werden kann, um diesen auf dem Rohr oder dem Stutzen zu befestigen. Dazu werden die beiden Endabschnitte des Schellenbandes mittels der Schellenbandspanneinheit in entgegengesetzter Umfangsrichtung zueinander gezogen. Oftmals überlappen sich die Endabschnitte des Schellenbandes, wobei einer der beiden Endabschnitte zumeist fest mit der Schellenbandspanneinheit verbunden ist. So ist bei der zuvor genannten Schneckengewindeschelle ein Endabschnitt mit einem tunnelförmigen Gehäuse verbunden. Der andere Endabschnitt ist mit rippenartigen Gewindeabschnitten versehen und führt durch das Gehäuse. Die Gewindeabschnitte des Endabschnitts wirken mit einem Gewinde einer in das Gehäuse eingefassten Gewindeschraube zusammen, um einen Schelleninnendurchmesser durch ein Verdrehen der Gewindeschraube zu verkleinern oder zu vergrößern.
Beim Spannen des Schellenbandes durch die Schellenbandspanneinheit wird der Durchmesser des Schellenbandes verringert, so dass das Schellenband eine radiale Kraft auf den Schlauch ausübt, um diesen auf dem Rohr festzuklemmen. Durch ein Nachlassen der Elastizität des Schlauches - auch als Relaxieren des Schlauches bezeichnet - begründet durch die Viskoelastizität aller Elastomerwerkstoffe besteht die Gefahr, dass sich die radiale Kraft auf den Schlauch verringert. Damit verringert sich die Klemmkraft zwischen dem Schlauch und dem Rohr, so dass der Schlauch in einem ungünstigen Fall ungewollt von dem Rohr rutscht. Um ein wiederholtes manuelles Nachspannen mittels der Schellenbandspanneinheit zu vermeiden, ist aus der US2009/0158559A1 bekannt, das Schellenband mit von dem Schellenband radial nach innen ragenden Laschen zu versehen. Diese Laschen wirken unmittelbar federnd auf den Schlauch. Wenn der Schlauch wie zuvor erläutert an Elastizität verliert, verbleibt der Federdruck der Federn auf dem Schlauch.
In der Praxis wurde jedoch festgestellt, dass eine Ausgestaltung des Schellenbands mit von diesem radial nach innen ragenden Laschen ein Nachspannen des Schellenbandes nicht vollständig ersetzt oder überflüssig macht. Indem die Laschen im Wesentlichen punktuell an Kontaktstellen auf den Schlauch drücken und die Bereiche des Schlauches zwischen den Kontaktstellen (Zwischenbereiche) so groß sind, dass der Schlauch in diesen Zwischenbereichen im Wesentlichen keiner oder einer deutlich geringeren radialen Kraft ausgesetzt ist, besteht die Gefahr, dass der Schlauch gegenüber dem Rohr nicht mehr abgedichtet ist. Denn in den Zwischenbereichen mit der deutlich geringeren radialen Kraft bzw. Klemmkraft ist die damit verursachte Dichtung nicht so stark bzw. so dicht, um den oftmals hohen Innendrücken in dem Schlauch beziehungsweise in dem Rohr oder Stutzen standzuhalten. Infolgedessen entsteht eine ungewollte Leckage. Darüber hinaus kann ein korrekter Sitz des Schlauches auf dem Rohr oder Stutzen gefährdet sein.

In der US 5 261 145 A ist eine gattungsgemäße Schlauchschelle offenbart, bei der zur Vermeidung manuellen Nachspannens in axialer Richtung mehrere Laschen parallel benachbart angeordnet sind. Der bei geringer werdender Elastizität des Schlauches verbleibende Federdruck ist damit zwar in axialer Richtung gleichmäßiger verteilbar, es verbleibt jedoch der Nachteil, dass die Zwischenbreite zwischen den Kontaktstellen in Umfangsrichtung der Schelle immer noch genauso groß ist, wie ohne axial benachbarte Laschen. Damit kann der Gegenstand der D1 das Problem der geringeren Klemmkraft in den Zwischenbereichen nicht lösen.

Die Aufgabe der Erfindung ist die Bereitstellung einer Schellenanordnung zur Befestigung eines Schlauches auf einem Rohr bzw. einem Stutzen, die auch bei einem Relaxieren des Schlauches einen sicheren Sitz des Schlauches auf dem Rohr bzw. Stutzen und eine Dichtigkeit zwischen dem Schlauch und dem Rohr bzw. Stutzen gewährleistet.

Gemäß einem ersten Aspekt wird die Aufgabe durch die erfindungsgemäße Schellenanordnung zur Befestigung eines Schlauches auf einem Rohr oder einem Stutzen gelöst, umfassend eine Schelle mit einem ringförmigen Schellenband und einer Schellenbandspanneinheit, wobei die Schelle eine Aufnahmeöffnung für den Schlauch und das Rohr bzw. den Stutzen bildet, und mehrere über einen Umfang des Schellenbands verteilte Federn, die vom Schellenband in die Aufnahmeöffnung ragen und in Radialrichtung des Schellenbands federwirkend sind, wobei die Federn durch Laschen gebildet sind, und wobei zwei benachbarte Laschen in Umfangsrichtung des Schellenbands versetzt und in Axialrichtung des Schellenbands überlappend angeordnet sind.

Wie zuvor erwähnt, sind Federn bei einem Einsatz von Schellenanordnungen aus dem Stand der Technik bekannt, um ein kontinuierliches Nachspannen des Schlauches auf dem Rohr bzw. dem Stutzen zu erreichen. Vorzugsweise werden für die Schellenanordnung vier, fünf, sechs, sieben, acht oder mehr Federn verwendet. Diese bekannten Federn sind über den Umfang des Schellenbands verteilt angeordnet und weisen jeweils in Umfangsrichtung einen bestimmten Abstand auf. Dieser Abstand zwischen den Federn entspricht bei bekannten Schellenanordnungen auch einem minimalen Abstand zwischen den Kontaktstellen zweier benachbarten Federn zum Schlauch. Korrespondierend zu den Kontaktstellen und ihrem jeweiligen Abstand voneinander verhält sich auch die ungleichmäßige Verteilung der von den Federn auf den Schlauch ausgeübten Spannkraft. Um eine gleichmäßigere Verteilung der von den Federn bzw. Laschen auf den Schlauch auszuübenden Spannkraft zu erreichen, ist es gemäß einem Grundgedanken der Erfindung vorgesehen, die Laschen dichter aneinander zu platzieren. Dies wird erreicht, in dem jeweils zwei benachbarte Laschen in Umfangsrichtung des Schellenbands versetzt und in Axialrichtung des Schellenbands überlappend angeordnet sind. Zumindest zwei Laschen können somit parallel zueinander angeordnet werden. Außerdem kann damit gewährleistet werden, dass in Umfangsrichtung betrachtet ein Kontakt einer der Laschen zu dem Schlauch beginnt, bevor ein Kontakt der anderen, benachbarten Lasche zu dem Schlauch endet. Bezüglich eines (Kreis-) Bogenabschnitts des Schlauchs können also gleichzeitig zwei Laschen federnden Kontakt zu dem Schlauch aufweisen. Die beiden Laschen überlappen sich also in Axialrichtung des Schellenbands. Somit kann ein Abstand zwischen den Kontaktstellen zweier benachbarten Laschen zum Schlauch minimiert werden. Mit diesem minimierten Abstand der Kontaktstellen entsteht in Umfangsrichtung des Schellenbands ein Pfad mit annähernd gleichmäßiger auf den Schlauch einprägbaren Spannkraft. Diese annähernd gleichmäßige Spannkraft sowie das kontinuierliche Nachspannen bewirken, dass eine sich zwischen dem Schlauch und dem Rohr bzw. dem Stutzen ausbildende Dichtung besonders hohen Drücken standhalten kann, selbst bei einer Verringerung des Außendurchmessers des Schlauches nach der erstmaligen Montage. Die erfindungsgemäße Schellenanordnung kann dabei auf alle bekannten Verfahren für Vorpositionierung von Schellen angewendet werden.

Eine vorteilhafte Ausgestaltung der Schellenanordnung zeichnet sich dadurch aus, dass die jeweils zwei benachbarten Laschen in Axialrichtung des Schellenbands benachbart sind. Vorzugsweise handelt es sich also jeweils um zwei in Axialrichtung des Schellenbands benachbarte Laschen. Diese Laschen können somit besonders einfach in Axialrichtung des Schellenbands überlappend angeordnet sein. Mit einem Überlappen in Axialrichtung ist deshalb bevorzugt gemeint, dass die zugehörigen beiden Laschen jeweils einen Abschnitt aufweisen, der in dem gleichen (Kreis-) Bogenabschnitt des Schellenbands angeordnet ist. Indem die beiden Laschen zueinander benachbart sind, kann verhindert werden, dass sie sich überlagern. Vielmehr können sie in Axialrichtung des Schellenbands voneinander beanstandet sein, so dass die beiden Laschen in Umfangsrichtung versetzt zueinander sind.

Eine derartige Anordnung der Laschen bietet die Möglichkeit, einen quasi kontinuierlichen Kontakt zwischen einer Mehrzahl von Laschen und dem Schlauch herzustellen. Denn der axiale Abstand zwischen den Laschen kann entsprechend klein gewählt werden.

Eine weitere vorteilhafte Ausgestaltung der Schellenanordnung zeichnet sich dadurch aus, dass die Laschen in Radialrichtung des Schellenbands gewölbt ausgestaltet sind. Gewölbte Laschen lassen sich besonders günstig und einfach durch Ausbiegungen herstellen. Außerdem kann eine gewölbte Lasche eine stetige Kontur mit einer vorzugsweise flachen Kontaktfläche bieten, so dass ein Kontakt zu dem Schlauch nicht punkt- oder linienförmig, sondern eher flächenförmig ist. Die entsprechende Kontaktfläche kann vergrößert werden, indem die Kontur eines in Längsrichtung betrachteten, mittleren Abschnitts der Lasche an die Außenkontur bzw. den Außenradius des Schlauchs angepasst ist. Aber auch schon kleinere Anpassungen einer jeweiligen Lasche, wie beispielsweise ein Trapezquerschnitt oder ein wellenförmiger Querschnitt, erhöhen die Kontaktfläche zwischen der Lasche und dem Schlauch, was die Übertragung der Federkraft auf eine größere Kontaktfläche verteilt und somit vergleichmäßigt. Deshalb können durch derartige Laschen höhere Federkräfte auf den Schlauch aufgebracht werden, ohne mit stark radial punktuellen Krafteinwirkungen auf den Schlauch rechnen zu müssen.

Eine weitere vorteilhafte Ausgestaltung der Schellenanordnung zeichnet sich dadurch aus, dass ein minimaler Abstand von zwei in Axialrichtung überlappenden Laschen kleiner als ein Viertel, insbesondere kleiner als ein Fünftel, einer mittleren Breite des Schellenbands ist. Je kleiner der Abstand zwischen den in Axialrichtung überlappenden Laschen gewählt wird, desto gleichmäßiger erfolgt die Übertragung der Spannkraft von dem Schellenband über die Laschen auf den Schlauch. Grundsätzlich können zwei in Axialrichtung benachbarte Laschen aneinander grenzen oder durch einen Schlitz voneinander getrennt sein. In der Praxis hat sich jedoch bewährt, einen bestimmten Abstand zwischen zwei in Axialrichtung überlappenden Laschen vorzusehen, um eine ausreichende oder bestimmte Zugsteifigkeit und/oder Verdrehsteifigkeit des Schellenbands zu gewährleisten. Ein größerer Abstand zwischen zwei in Axialrichtung überlappenden Laschen würde zwar die zuvor genannten Steifigkeiten erhöhen, jedoch auch zur Verschlechterung der gleichmäßigen Übertragung der Spannkraft von den Laschen auf den Schlauch führen. Um eine besonders gute, gleichmäßige Übertragung der Spannkraft zu erreichen, ist es deshalb bevorzugt vorgesehen, dass der minimale Abstand zwischen den beiden Laschen kleiner als ein Viertel oder ein Fünftel der mittleren Breite des Schellenbands ist.

Eine weitere vorteilhafte Ausgestaltung der Schellenanordnung zeichnet sich dadurch aus, dass sich zwischen zwei in Axialrichtung überlappenden Laschen ein von dem Schellenband ausgebildeter Steg erstreckt. Wie eingangs erläutert, werden die beiden Endabschnitte des Schellenbands mittels der Schellenbandspanneinheit in entgegengesetzter Umfangsrichtung zueinander gezogen, um einen Schelleninnendurchmesser durch ein Verdrehen der Gewindeschraube der Schellenbandspanneinheit zu verkleinern. Mit dem Verringern des Innendurchmessers des Schellenbands wird dieses zugleich gespannt, so dass das Schellenband eine radialen Kraft auf den Schlauch ausübt. Je nach Einsatzzweck können die Kräfte in Umfangsrichtung des Schellenbands unterschiedlich hoch sein. Bei einer hohen Beanspruchung ist es deshalb vorteilhaft, wenn zwischen den Laschen ein vom Schellenband ausgebildeter Steg vorhanden ist. Dieser Steg trägt vorteilhaft dazu bei, dass das Schellenband entsprechend hohen Kräften in Umfangsrichtung ausgesetzt werden kann.

Eine weitere vorteilhafte Ausgestaltung der Schellenanordnung zeichnet sich dadurch aus, dass jede der Laschen durch zwei einander gegenüber angeordnete Endabschnitte der Lasche mit dem Schellenband verbunden ist. Die übrigen Endabschnitte oder Seiten der jeweiligen Lasche sind vorzugsweise als verbindungsfreie Kanten ausbildet. Eine Federkraft einer derartigen Lasche setzt sich aus zwei Kraftkomponenten zusammen. Eine erste Kraftkomponente der jeweiligen Lasche ist auf ein Verbiegen der Lasche zurückzuführen. Wird die Lasche beispielsweise um eine Achse in Axialrichtung des Schellenbands elastisch verbogen, entsteht eine Rückstellkraft, die zu der ersten Kraftkomponente korrespondiert. Eine zweite Kraftkomponente der jeweiligen Lasche ist auf ein Verstauchen der Lasche in Umfangsrichtung des Schellenbands zurückzuführen. Ein derartiges Verstauchen der Lasche tritt auf, wenn die Lasche entsprechend ihrer Federwirkung in Radialrichtung des Schellenbands zusammengedrückt wird. Damit wird die Wölbung der Lasche flacher. Wäre die Lasche nicht mit ihren zwei Endabschnitten mit dem Schellenband verbunden, würde sich ein direkter Abstand zwischen den beiden Endabschnitten der Lasche vergrößern. Indem die beiden Endabschnitte der Lasche jedoch mit dem Schellenband verbunden sind, wird die Lasche daran gehindert, den direkten Abstand zwischen den beiden Endabschnitten zu vergrößern. Deshalb wird die Lasche zwischen den beiden Endabschnitte gestaucht, wenn die Lasche - wie zuvor erläutert - in Radialrichtung des Schellenbands zusammengedrückt wird. Mit dem Stauchen der Lasche entsteht in der Lasche eine Druckspannung, die zu der zuvor genannten, zweiten Kraftkomponente korrespondiert. Deshalb ist es mit derartigen Laschen möglich, eine Schellenanordnung mit hohen Federkräften bei einem besonders kleinen Bauraum zu bieten.

Eine weitere vorteilhafte Ausgestaltung der Schellenanordnung zeichnet sich dadurch aus, dass jede Lasche eine Längsachse aufweist, die sich zwischen den Endabschnitten der jeweiligen Lasche erstreckt, und jede der Längsachsen schräg zu einer Umfangsrichtung des Schellenbands ausgerichtet ist. Eine derartige Ausrichtung der Laschen bzw. ihrer jeweiligen Längsachse bietet die Möglichkeit, jeweils zwei in Axialrichtung des Schellenbands benachbarte Laschen in Umfangsrichtung des Schellenbands versetzt und in Axialrichtung des Schellenbands überlappend anzuordnen. Wären die Laschen beispielsweise auf einem Ringabschnitt des Schellenbands (direkt) hintereinander angeordnet, wobei jede der Längsachsen parallel zu der Umfangsrichtung des Schellenbands angeordnet ist, würde diese Möglichkeit nicht bestehen. Mit der erfindungsgemäßen Ausgestaltung können die Laschen also in Axialrichtung und/oder Umfangsrichtung des Schellenbands zumindest abschnittsweise unmittelbar nebeneinander oder parallel zueinander angeordnet sein, so dass eine Überlappung der Laschen erreicht werden kann.

Eine weitere vorteilhafte Ausgestaltung der Schellenanordnung zeichnet sich dadurch aus, dass jede der Laschen zwei Außenkanten aufweist, die sich jeweils zwischen ihren Endabschnitten erstrecken. An den Endabschnitten ist die jeweilige Lasche mit dem Schellenband verbunden. Wird die jeweilige Lasche bei der Montage der Schellenanordnung in Radialrichtung zusammengedrückt, erfährt die Lasche zumindest in einer Richtung, die sich zwischen den Endabschnitt erstreckt, eine Stauchung. Eine entsprechende Federkraftkomponente entsteht. Um eine ungleichmäßige Federsteifigkeit der jeweiligen Lasche zu verhindern, sind die Außenkanten nicht mit dem Schellenband verbunden. Sie können in diesem Fall auch keinen ungewollten Einfluss auf ein Federverhalten der jeweiligen Lasche haben.

Eine weitere vorteilhafte Ausgestaltung der Schellenanordnung zeichnet sich dadurch aus, dass zumindest eine der Außenkanten einer jeden Lasche tailliert ist. Eine Taillierung der Lasche bietet eine Möglichkeit, die Federsteifigkeit der jeweiligen Lasche konstruktiv zu beeinflussen. Die jeweilige Lasche kann über ihre Längsrichtung und/oder Querrichtung hinweg eine gleichmäßige oder bestimmte Steifigkeit aufweisen.

Eine weitere vorteilhafte Ausgestaltung der Schellenanordnung zeichnet sich dadurch aus, dass eine Federkennlinie einer jeden Lasche degressiv ist. Eine degressive Federkennlinie zeichnet sich dadurch aus, dass die Federkraft unterproportional im Verhältnis zu einer Verformung der Feder bzw. eines Verformungswegs der Feder steigt. Eine Lasche mit einer degressiven Federkennlinie eignet sich besonders vorteilhaft zum Ausgleich von Temperaturschwankungen. Denn ab einer bestimmten Verformung bzw. ab einem bestimmten Verformungsweg weist die Federkennlinie nur noch einen verringerten Gradienten auf. Verformt sich der Schlauch und/oder das Schellenband aufgrund von Temperaturschwankungen, was zu einer entsprechenden Durchmesserveränderung führt, und sind die Laschen derart verformt, dass sich die Federkennlinie in dem Bereich mit dem zuvor genannten, verringerten Gradienten aufhält, ist ein entsprechender Einfluss der Durchmesserveränderungen auf die Federkraft gering. Die Federkraft auf den Schlauch bleibt also trotz der Temperaturschwankungen annähernd gleich bzw. konstant. Eine Lasche mit einer degressiven Federkennlinie weist beispielsweise einen wellenförmigen Querschnitt auf und/oder ist entlang mindestens einer ihrer Außenkanten tailliert ausgestaltet.

Eine weitere vorteilhafte Ausgestaltung der Schellenanordnung zeichnet sich dadurch aus, dass eine Federkennlinie einer jeden Lasche progressiv ist. Eine progressive Federkennlinie zeichnet sich dadurch aus, dass die Federkraft überproportional im Verhältnis zu einer Verformung der Feder bzw. eines Verformungswegs der Feder steigt. Laschen mit progressiven Federkennlinie eignen sich vorteilhaft, um besonders hohe Federkräfte auf den Schlauch auszuüben. Bereits bei kleineren Verformungen der jeweiligen Lasche treten überproportional große Federkräfte auf. Derartige Laschen eignen sich vorzugsweise für eine Anwendung bei Schläuchen, die einem geringen Relaxieren oder Fließen ausgesetzt sind. Eine Lasche mit einer progressiven Federkennlinie weist beispielsweise einen trapezförmigen Querschnitt auf.

Eine weitere vorteilhafte Ausgestaltung der Schellenanordnung zeichnet sich dadurch aus, dass das Schellenband zu jeder Stirnseite von einem ununterbrochenen Ringabschnitt gebildet ist. Da diese Ringabschnitte dazu beitragen, dass Kräfte in Umfangsrichtung übertragen werden können und das Schellenband somit gespannt werden kann, um den Innendurchmesser des Schellenbands zu verringern, hat es sich als vorteilhaft erwiesen, die stirnseitigen Ringabschnitte ununterbrochen auszugestalten. Die Laschen können im Bereich zwischen den stirnseitigen Ringabschnitten angeordnet sein.

Eine weitere vorteilhafte Ausgestaltung der Schellenanordnung zeichnet sich dadurch aus, dass jede der Außenkanten einer Lasche einer der Ringabschnitte zugewandt und von diesem, insbesondere durch einen Schlitz, beabstandet ist. Vorzugsweise erstrecken sich die Außenkanten jeweils zwischen den Endabschnitt einer Lasche. Deshalb können die Außenkanten frei beweglich sein, denn die Anbindung der Laschen erfolgt über die Endabschnitte. Indem die Außenkanten einer Lasche bevorzugt einem der Ringabschnitte zugewandt sind, kann gewährleistet werden, dass die Ringabschnitte von einer zusätzlichen, unmittelbaren Belastung durch eine direkte Verbindung zu den Laschen befreit sind. Mit anderen Worten wird mit diese Ausgestaltung der Schellenanordnung erreicht, die Ringabschnitte frei von einer Anbindung einer Lasche zu halten.

Eine weitere vorteilhafte Ausgestaltung der Schellenanordnung zeichnet sich dadurch aus, dass ein Einsatzteil koaxial in das Schellenband eingesetzt ist, wobei das Einsatzteil als ringförmiges Band ausgebildet ist, und wobei die Laschen in Radialrichtung federwirkend zwischen dem Schellenband und dem Einsatzteil angeordnet sind. Vorzugsweise ist das Einsatzteil als ringförmiges Band ausgebildet. Das Band kann aus Metall, Kunststoff oder einem anderen geeigneten Material hergestellt sein. Dabei ist das Band derart gebogen, dass es einen Ring bildet. Das Einsatzteil ist deshalb bevorzugt ringförmig. Die beiden Endabschnitte des Bandes können sich aufeinander liegen. Das aus diesem Band gebildete Einsatzteil ist in das ringförmige Schellenband eingesetzt, wobei das Schellenband und das Einsatzteil eine gemeinsame Längsachse aufweisen können. Bevorzugt sind das Schellenband und das Einsatzteil in Längsrichtung auch mittig zueinander angeordnet.

Beim Spannen des Schellenbandes durch die Schellenbandspanneinheit wird der Durchmesser des Schellenbandes verringert, so dass das Schellenband eine radiale Kraft auf das Einsatzteil ausübt. Das Einsatzteil dient wiederum dazu, eine radiale Kraft auf den Schlauch auszuüben, um diesen auf dem Rohr festzuklemmen. Durch ein Nachlassen der Elastizität des Schlauches beziehungsweise eines Relaxieren des Schlauches besteht die Gefahr, dass sich die radiale Kraft auf den Schlauch verringert. Um diese negativen Effekte zu kompensieren, drücken die Federn mit einer Federkraft, die bevorzugt einer zuvor eingestellten, radialen Spannkraft entspricht, radial außenseitig auf das Einsatzteil. Verringert sich nun der Außendurchmesser des Schlauches aufgrund des genannten Relaxierens, passt sich das Einsatzteil dem verringerten Außendurchmesser des Schlauches kontinuierlich an. Die Federn drücken also in der Weise auf das Einsatzteil, dass sich der Durchmesser des Einsatzteils ebenfalls verringert. Es kommt also zu einem kontinuierlichen Nachspannen des Schlauches auf dem Rohr bzw. dem Stutzen. Indem die Federn über den Umfang des Schellenbands verteilt angeordnet sind und nicht direkt auf den Schlauch, sondern auf das Einsatzteil drücken, erfährt der Schlauch eine über den Umfang des Schlauches betrachtete weiter vergleichmäßigte Spannkraft. Diese Spannkraft ändert sich auch nicht bei dem Relaxieren des Schlauches. Diese Spannkraft sowie das kontinuierliche Nachspannen bewirken, dass eine sich zwischen dem Schlauch und dem Rohr bzw. Stutzen ausbildende Dichtung besonders hohen Drücken standhalten kann, selbst bei einer Verringerung des Außendurchmessers des Schlauches nach der erstmaligen Montage.

Eine weitere vorteilhafte Ausgestaltung der Schellenanordnung zeichnet sich dadurch aus, dass die Laschen jeweils einen Ringraum durchquerend ausgestaltet sind, der zwischen dem Schellenband und den Einsatzteil ausgebildet ist. Der Ringraum zwischen dem Schellenband und dem Einsatzteil bietet die Möglichkeit, dass eine radiale, von dem Schellenband ausgehende Spannkraft auf die Federn und bzw. oder das Einsatzteil einstellbar ist. Wird bei der Montage der Stellenanordnung das Stellenband mittels der Schellenbandspanneinheit auf einen ersten Wert gespannt, so kann in einem weiteren Schritt die Spannung des Schellenbands durch Anpassung des Ringraums genauer eingestellt werden, insbesondere vergrößert oder verkleinert werden. Außerdem bietet der Ringraum nach der Montage der Schellenanordnung die Möglichkeit, dass sich die Federn durch ein Relaxieren des Schlauches ausdehnen, so dass das Einsatzteil einer entsprechenden Durchmesserverringerung folgen kann.

Eine weitere vorteilhafte Ausgestaltung der Schellenanordnung zeichnet sich dadurch aus, dass das Schellenband und bzw. oder das Einsatzteil aus Metall, insbesondere Federstahl, sind. Metalle eignen sich für das Schellenband und bzw. oder das Einsatzteil besonders vorteilhaft, da sie für gewöhnlich eine hohe Zugsteifigkeit und bzw. oder eine hohe Biegesteifigkeit aufweisen. Insbesondere die hohe Biegesteifigkeit ist von Vorteil, da die Federn in Radialrichtung des Schellenbandes bzw. des Einsatzteil wirken. Die entsprechenden Federkräfte rufen bei einer entsprechend hohen Biegesteifigkeit nur eine sehr geringe Verbiegung in Radialrichtung auf. Vielmehr wird die einwirkende Federkraft flächig auf die Bereiche neben der Federkrafteinwirkungsstelle verteilt. Bei dem Einsatzteil kann die Federkraft über eine entsprechende Fläche auf den Schlauch verteilt werden. Grundsätzlich können für das Schellenband und bzw. oder das Einsatzteil auch andere Materialien vorgesehen sein, die ähnliche oder gleiche Eigenschaften bieten.

Gemäß einem weiteren Aspekt wird die eingangs genannte Aufgabe außerdem durch eine erfindungsgemäße Verbindungsanordnung geöst, umfassend ein Rohr oder einen Stutzen mit einem Rohr- bzw. Stutzen endabschnitt und ein Schlauch mit einem Schlauchendabschnitt, wobei der Schlauchendabschnitt auf den Rohr- bzw. Stutzenendabschnitt aufgesteckt ist, und wobei der Schlauchendabschnitt mittels der erfindungsgemäßen Schellenanordnung kraftschlüssig auf dem Rohr- bzw. Stutzenendabschnitt befestigt ist. Dabei gelten Merkmale, Details und Vorteile, die im Zusammenhang mit der erfindungsgemäßen Schellenanordnung beschrieben sind, selbstverständlich auch im Zusammenhang mit der erfindungsgemäßen Verbindungsanordnung und jeweils umgekehrt, sodass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine perspektivische Ansicht einer erfindungsgemäßen Schellenanordnung,
- Fig. 2: einen Ausschnitt einer schematischen Seitenansicht des Schellenbands,
- Fig. 3: einen weiter vergrößerten Ausschnitt des Schellenbands aus Fig. 2,
- Fig. 4: einen Ausschnitt einer schematischen Querschnittsansicht der Schellenanordnung,
- Fig. 5: einen Ausschnitt einer weiteren schematischen Seitenansicht des Schellenbands,
- Fig. 6: einen Ausschnitt einer schematischen Querschnittsdarstellung des Schellenbands mit einer wellenförmig gewölbten Lasche,
- Fig. 7: einen Ausschnitt einer schematischen Querschnittsdarstellung des Schellenbands mit einer trapezförmig gewölbten Lasche, und
- Fig. 8: einen Ausschnitt einer weiteren, schematischen Seitenansicht des Schellenbands mit taillierten Laschen.

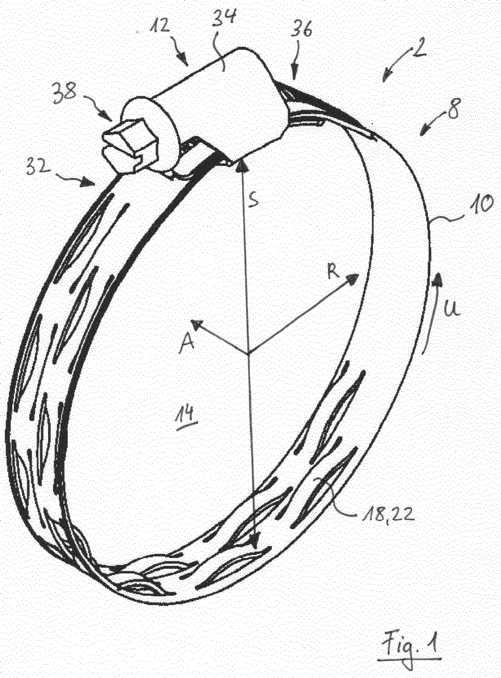

Die Figur 1 zeigt die erfindungsgemäße Schellenanordnung 2 in einer schematischen Perspektivansicht. Die Schellenanordnung 2 dient zur Befestigung eines Schlauches (nicht dargestellt) auf einem Rohr oder Stutzen (nicht dargestellt). Die Schellenanordnung 2 umfasst eine Schelle 8 mit einem ringförmigen Schellenband 10 und einer Schellenbandspanneinheit 12. Bei der in Figur 1 dargestellten Schelle 8 handelt es sich um eine Schneckengewindeschelle 8 mit einem metallischen Schellenband 10. Ein erster Endabschnitt 32 des Schellenbands 10 ist mit einem Gehäuse 34 der Schellenbandspanneinheit 12 verbunden. Das Gehäuse 34 weist eine tunnelförmige Öffnung auf, in die ein zweiter Endabschnitt 36 des Schellenbands 10 eingeführt ist. Der zweite Endabschnitt 36 ist mit treppenartigen Gewindeerhebungen versehen, die mit einem Gewinde einer in das Gehäuse 34 eingefassten Gewindeschraube 38 zusammenwirken. Durch ein Verdrehen der Gewindeschraube 38 kann der zweite Endabschnitt 36 in Umfangsrichtung U durch die tunnelförmige Öffnung des Gehäuses 34 bewegt werden. Korrespondierend zu dieser Bewegung vergrößert oder verkleinert sich ein Schelleninnendurchmesser S. Das Gehäuse 34 mit der Gewindeschraube 38 wird auch als Gewindespanneinheit bezeichnet und ist eine bevorzugte Ausführungsform der Schellenbandspanneinheit 12.

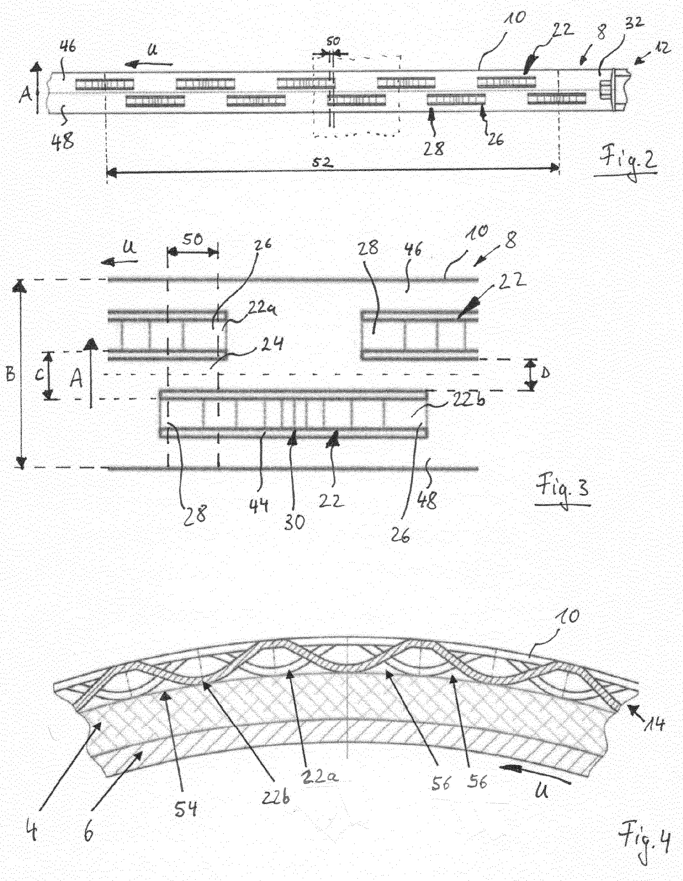

In den von dem Schellenband 10 umfassten Raum, also der Aufnahmeöffnung 14, kann der Schlauch und das Rohr bzw. der Stutzen eingesetzt werden. Nach einem Einsetzen des Schlauchs und des Rohrs bzw. des Stutzens in den Aufnahmeöffnung 14 des Schellenbands 10 bildet sich zwischen dem Schellenband 10 und dem Schlauch ein Ringraum 56 aus, der auch in Fig. 4 gezeigt ist. In den Ringraum 56 ragen die mehrere Federn 18 hinein. Wie aus der Figur 1 zu entnehmen ist, sind die Federn 18 durch schräg zur Radialrichtung R von dem Schellenband 10 nach innen ragende Laschen 22 gebildet. Die Laschen 22 können grundsätzlich an das Schellenband 10 angeformt sein. Besonders bevorzugt sind die Laschen 22 jedoch durch Ausstanzungen und Ausbiegungen aus dem Schellenband 10 gebildet. Somit sind das Schellenband 10 und die Laschen 22 bzw. die Federn 18 einteilige ausgestaltet.

Diese Laschen 22 sind über den Umfang des Schellenbands 10 verteilt. Dabei sind die Laschen 22 in der Weise ausgerichtet, dass sie in Radialrichtung R federwirkend zwischen dem Schellenband 10 und dem Schlauch angeordnet sind. Die Laschen 22 verursachen also jeweils eine Spannkraft in Radialrichtung R zwischen dem Schellenband 10 und dem Schlauch.

Um einen Schlauch auf einem Rohr zu befestigen, wird zunächst ein Endabschnitt des Schlauches auf ein Endabschnitt des Rohres gesteckt. Radial außenseitig auf dem Endabschnitt des Schlauchs wird die Schellenanordnung 2 angeordnet. Um einen festen Sitz des Endabschnitts des Schlauchs auf dem Endabschnitt des Rohrs sowie eine Dichtigkeit zwischen dem Schlauch und dem Rohr zu gewährleisten, wird das Schellenband 10 mittels der Schellenbandspanneinheit 12 in Umfangsrichtung U gespannt. Die Endabschnitte 32, 36 des Schellenbands 10 werden also in entgegengesetzter Umfangsrichtung U zueinander bewegt. Damit verringert sich ein Innendurchmesser S des Schellenbands 10. Durch die Verringerung des Innendurchmessers S des Schellenbands 10 drücken die Laschen 22 zunehmend stärker radial außenseitig auf den Schlauch. Die Laschen 22 können dazu ausgestaltet sein, die durch das Schellenband 10 ausgehende Kraft in eine flächig durch die Laschen 22 auf den Schlauch wirkende Kraft umzuwandeln. Die Laschen 22 weisen in diesem Falle eine entsprechende Biegesteifigkeit auf. Somit üben die Laschen 22 jeweils für sich betrachtet eine flächige bzw. über einen Umfangsabschnitt verteilte Spannkraft auf den Schlauch aus.

Außerdem ist es vorgesehen, dass jeweils zwei in Axialrichtung A der Schellenanordnung 2 benachbarte Laschen 22 in Umfangsrichtung U des Schellenbands 10 versetzt und in Axialrichtung A des Schellenbands 10 überlappend angeordnet sind. Durch diese Anordnung der Laschen 22 kann gewährleistet werden, dass die Laschen 22 den Schlauch entlang eines Pfades über den Umfang des Schellenbands 10 mit annähernd gleichmäßiger Spannkraft beaufschlagen. Somit sitzt der Schlauch sicher und dicht auf dem Rohr bzw. dem Stutzen.

In der Figur 2 ist eine schematische Seitenansicht eines Ausschnitts der Schellenanordnung 2 mit der Schelle 8 gezeigt. Dieser Ausschnitt zeigt das Schellenband 10 sowie den zugehörigen ersten Endabschnitt 32, der an der Schellenbandspanneinheit 12 befestigt ist. Außerdem umfasst die Schellenanordnung 2 eine Mehrzahl von federnden Laschen 22. Die Laschen 22 können in zwei Gruppen unterteilt werden, wobei die Laschen 22 der ersten Gruppe auf einem ersten Ringbereich 46 und die Laschen 22 der zweiten Gruppe auf einem zweiten Ringbereich 48 angeordnet sind. In jedem der Ringbereiche 46, 48 sind die jeweils zugehörigen Laschen 22 mit einem Abstand hintereinander angeordnet. In Umfangsrichtung U betrachtet folgt auf eine Lasche 22 der ersten Gruppe jeweils eine Lasche 22 der zweiten Gruppe, und umgekehrt. Die Laschen 22 wechseln sich also ab. Dabei ist es vorgesehen, dass sich zwei benachbarte Laschen 22, von denen jeweils eine aus der ersten Gruppe und eine aus der zweiten Gruppe stammen, überlappen. Mit dem Überlappen ist bevorzugt gemeint, dass die beiden Laschen 22 einen gemeinsamen Bogenabschnitt 50 des Schellenbands 10 überdecken oder überstreichen.

Um diesen Zusammenhang genauer betrachten zu können, zeigte Figur 3 einen Ausschnitt der Schellenanordnung 2 in einem vergrößerten Maßstab. Soweit es sinnvoll ist, wird auf die vorherigen Erläuterungen Bezug genommen. Zu erkennen ist, dass zwei in Axialrichtung A des Schellenbands 10 benachbarte Laschen 22a, 22b überlappend angeordnet sind. Diese Überlappung ist in Axialrichtung A des Schellenbands 10. Teile der beiden Laschen 22a, 22b sind also in einem gemeinsamen Bogenabschnitt 50 des Schellenbands 10 angeordnet. Die beiden benachbarten Laschen 22a, 22b sind voneinander beanstandet. Wie aus der Figur 3 ersichtlich ist, erstreckt sich zwischen den beiden Laschen 22a, 22b ein von dem Schellenband 10 gebildeter Steg 24. Darüber hinaus ist aus einer Zusammenschau der Figuren 2 und 3 zu erkennen, dass jeder der Laschen 22 durch zwei einander gegenüber angeordneten Endabschnitte 26, 28 der jeweiligen Lasche 22 mit dem Schellenband 10 verbunden ist. Somit weist jede Lasche 22 zwei Außenkanten 30 auf, die sich jeweils zwischen den Endabschnitten 26, 28 erstrecken. Jede der Außenkanten 30 ist durch einen Schlitz 44 von dem Schellenband 10 getrennt. Somit sind zwei in Axialrichtung A benachbarte Laschen 22a, 22b durch einen Schlitz 44 der ersten Lasche 22a, einen Steg 24 und einen Schlitz 44 der zweiten Lasche 22b in Axialrichtung A voneinander beanstandet. Dieser Abstand C, vorzugsweise als ein minimaler Abstand oder ein mittlerer Abstand von zwei in Axialrichtung A überlappenden Laschen 22a, 22b betrachtet, ist vorteilhafter Weise kleiner als ein Viertel, insbesondere kleiner als ein Fünftel, einer mittleren Breite B des Schellenbands ist. Entsprechendes kann für eine Breite D des Stegs 24 gelten.

Darüber hinaus ist es vorgesehen, dass die gleichen, in Axialrichtung A benachbarten Laschen 22a, 22b versetzt zueinander angeordnet sind. Dieser Versatz erstreckt sich in Umfangsrichtung U des Schellenbands 10. Die beiden Laschen 22a, 22b sind also in Umfangsrichtung U des Schellenbands 10 versetzt zueinander angeordnet. Durch die zuvor erläuterte Überlappung sowie den genannten Versatz kann ein Bogenabschnitt 52 des Schellenbands 10 von mehreren Laschen 22 ununterbrochen bedeckt oder überstrichen sein. In dem zuvor genannten Bogenabschnitt 52 gibt es also keinen Unterbogenabschnitt, der frei von Laschen 22 ist.

Ein entsprechender Zusammenhang ist aus der Figur 4 zu erkennen. Die gestrichelt dargestellten Laschen 22b sind in dem zweiten Ringbereich 48 des Schellenbands 10 angeordnet. Die nicht gestrichelten Laschen 22a sind in dem ersten Ringbereich 46 des Schellenbands 10 angeordnet. Die Laschen 22a, 22b wechselnden sich in Umfangsrichtung U in der Weise ab, dass eine Wölbung einer Lasche 22a beginnt, bevor eine Wölbung einer in Umfangsrichtung U vorangehenden Lasche 22b endet. Hieraus ergibt sich eine Überdeckung der beiden Wölbungen. Somit ist der Schlauch 4 in Umfangsrichtung U betrachtet einer quasi kontinuierlichen Federkraft ausgesetzt. Dabei ist die Überlappung der Laschen 22 vorzugsweise so gewählt, dass Stellen 54 ohne oder mit geringerer Einwirkung einer Federkraft minimiert oder zumindest möglichst klein ausfallen. Entsprechendes gilt für den Abstand C zwischen zwei in Axialrichtung A benachbarten Laschen 22a, 22b.

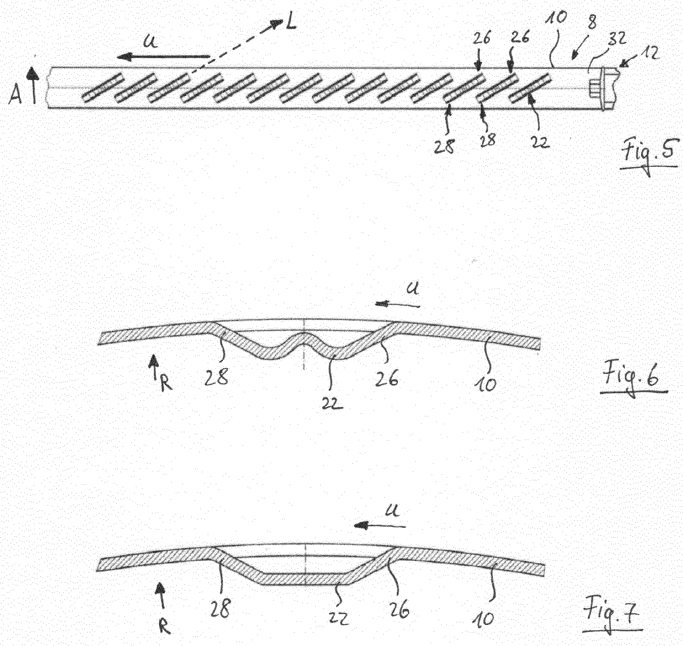

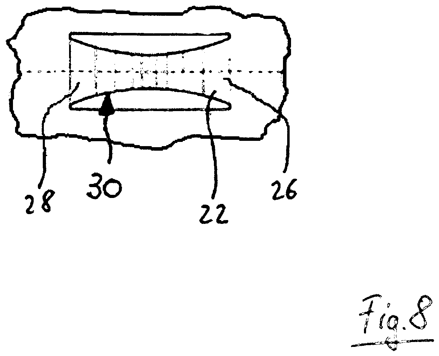

Eine weitere Ausgestaltung des Schellenbands 10 ist in Figur 5 gezeigt. Soweit es sinnvoll ist, wird auf die Erläuterungen zu den Figuren 2-4 Bezug genommen. Davon abweichend sind die Laschen 22 nicht parallel zu einer Umfangsrichtung U des Schellenbands 10 ausgerichtet. Vielmehr weist jede Lasche 22 eine Längsachse L auf, die sich zwischen zwei Endabschnitten 26, 28 der jeweiligen Lasche 22 erstreckt, wobei jede der Längsachse L schräg zu der Umfangsrichtung U des Schellenbands 10 ausgerichtet ist. Vorzugsweise schließen jeweils eine Längsachse L und die Umfangsrichtung U einen spitzen Winkel ein. Diese Anordnung der Laschen 22 ermöglicht es, dass zwei in Axialrichtung A benachbarte Laschen 22 in Umfangsrichtung U des Schellenbands 10 versetzt und in Axialrichtung A des Schellenbands 10 überlappend angeordnet sind. Somit ergeben sich entsprechende Vorteile, wie sie zu den Figuren 2-4 erläutert wurden sind.
Weitere vorteilhafte Ausgestaltungen der Laschen 22 lassen sich den Figuren 6 und 7 entnehmen. Sie zeichnen sich dadurch aus, dass jede der Laschen 22 durch zwei einander gegenüber angeordneten Endabschnitte 26, 28 der entsprechenden Lasche 22 mit dem Schellenband 10 verbunden ist. Mit der Montage des Schellenbands 10 drücken die Laschen 22 auf den Schlauch. Dabei werden die Laschen 22 in Radialrichtung R zusammengedrückt, so dass sich die Laschen 22 um eine Achse in Axialrichtung A verbiegen. Darüber hinaus erfolgt eine Stauchung der Laschen 22 in Umfangsrichtung U. Somit setzt sich die korrespondierende Federkraft einer jeweiligen Lasche 22 aus einer die Verbiegung repräsentierenden Kraftkomponente und einer die Stauchung repräsentierenden Kraftkomponente zusammen. Damit lässt sich die Baugröße der Laschen 22 zumindest in Radialrichtung R besonders klein halten. Darüber hinaus können durch derartige Laschen 22 besonders hohe Kräfte auf die Schlauchoberfläche ausgeübt werden. Ausgewählte Konturformen der Laschen 22, wie eine Wellenform (wie sie in Figur 6 dargestellt ist) oder eine Trapezform (wie sie in Figur 7 dargestellt ist), verbessern die Vergleichmäßigung eines Krafteintrags der jeweiligen Lasche 22 in Umfangsrichtung U des Schellenbands 10 betrachtet.
Eine weitere bevorzugte Ausgestaltung einer Lasche 22 ist in Figur 8 dargestellt. Wie zuvor werden auf die Erläuterungen der vorherigen Figuren Bezug genommen, soweit es sinnvoll ist. Die gezeigte Lasche 22 ist mit zumindest einer ihrer Außenkanten 30 tailliert ausgestaltet. Mit einer derartigen Lasche 22 lassen sich für den jeweiligen Anwendungsfall bevorzugte Federcharakteristika erzeugen. Entsprechendes gilt im Übrigen für die zuvor genannten, wellenförmigen oder trapezförmigen Laschen 22. Einzeln oder in Kombination miteinander können somit eine lineare Federkennlinie, ein degressive Federkennlinie, ein progressive Federkennlinie oder eine Kombination der zuvor genannten Federkennlinie - zum Beispiel nach Art eines Knackfrosches - erzeugt werden.

### Bezugszeichenliste

### (Teil der Beschreibung)

- A: Axialrichtung
- B: mittlere Breite
- C: Abstand
- D: Stegbreite
- L: Längsachse
- M: minimaler Abstand
- R: Radialrichtung
- S: Schelleninnendurchmesser
- U: Umfangsrichtung
- 2: Schellenanordnung
- 4: Schlauch
- 6: Rohr / Stutzen
- 8: Schelle
- 10: Schellenband
- 12: Schellenbandspanneinheit
- 14: Aufnahmeöffnung
- 18: Feder
- 22: Lasche
- 22a: Lasche
- 22b: Lasche
- 24: Steg
- 26: Endabschnitt der Lasche
- 28: Endabschnitt der Lasche
- 30: Außenkante
- 32: erster Endabschnitt des Schellenbands
- 34: Gehäuse
- 36: zweiter Endabschnitt des Schellenbands
- 38: Gewindeschraube
- 44: Schlitz
- 46: erster Ringbereich
- 48: zweiter Ringbereich
- 50: Bogenabschnitt
- 52: Bogenabschnitt
- 54: Stellen
- 56: Ringraum

## Patentansprüche

1. Schellenanordnung (2) zur Befestigung eines Schlauches auf einem Rohr oder einem Stutzen, umfassend
- eine Schelle (8) mit einem ringförmigen Schellenband (10) und einer Schellenbandspanneinheit (12), wobei die Schelle (8) eine Aufnahmeöffnung (14) für den Schlauch und das Rohr bzw. den Stutzen bildet, und
- mehrere über einen Umfang des Schellenbands (10) verteilte Federn (18), die vom Schellenband (10) in die Aufnahmeöffnung (14) ragen und in Radialrichtung R des Schellenbands (10) federwirkend sind,
- wobei die Federn (18) durch Laschen (22) gebildet sind, **dadurch gekennzeichnet, dass**
- zwei benachbarte Laschen (22) in Umfangsrichtung U des Schellenbands (10) versetzt und in Axialrichtung A des Schellenbands (10) überlappend angeordnet sind.

2. Schellenanordnung (2) nach Anspruch 1, **dadurch gekennzeichnet, dass** die jeweils zwei benachbarten Laschen (22) in Axialrichtung A des Schellenbands (10) benachbart sind.

3. Schellenanordnung (2) nach einem der vorhergehenden Ansprüche, **dadurch gekennzeichnet, dass** die Laschen (22) in Radialrichtung R des Schellenbands (10) gewölbt ausgestaltet sind.

4. Schellenanordnung (2) nach einem der vorhergehenden Ansprüche, **dadurch gekennzeichnet, dass** ein minimaler Abstand M von zwei in Axialrichtung A überlappenden Laschen (22) kleiner als ein Viertel, insbesondere kleiner als ein Fünftel, einer mittleren Breite B des Schellenbands (10) ist.

5. Schellenanordnung (2) nach einem der vorhergehenden Ansprüche, **dadurch gekennzeichnet, dass** sich zwischen zwei in Axialrichtung A überlappenden Laschen (22) ein von dem Schellenband (10) ausgebildeter Steg (24) erstreckt.

6. Schellenanordnung (2) nach einem der vorhergehenden Ansprüche, **dadurch gekennzeichnet, dass** jede der Laschen (22) durch zwei einander gegenüber angeordnete Endabschnitte (26, 28) der Lasche (22) mit dem Schellenband (10) verbunden ist.

7. Schellenanordnung (2) nach dem vorhergehenden Anspruch, **dadurch gekennzeichnet, dass** jede Lasche (22) eine Längsachse L aufweist, die sich zwischen den Endabschnitten (26, 28) der jeweiligen Lasche (22) erstreckt, und jede der Längsachsen L schräg zu einer Umfangsrichtung U des Schellenbands (10) ausgerichtet ist.

8. Schellenanordnung (2) nach einem der vorhergehenden Ansprüche 6 oder 7, **dadurch gekennzeichnet, dass** jede der Laschen (22) zwei Außenkante (30) aufweist, die sich jeweils zwischen den Endabschnitten (26, 28) der Lasche erstrecken.

9. Schellenanordnung (2) nach dem vorhergehenden Anspruch, **dadurch gekennzeichnet, dass** zumindest eine der Außenkanten (30) einer jeden Lasche (22) tailliert ist.

10. Schellenanordnung (2) nach einem der vorhergehenden Ansprüche, **dadurch gekennzeichnet, dass** das Schellenband (10) zu jeder Stirnseite von einem ununterbrochenen Ringabschnitt gebildet ist.

11. Schellenanordnung (2) nach dem vorhergehenden Anspruch, **dadurch gekennzeichnet, dass** jede der Außenkanten (30) einer Lasche (22) einer der Ringabschnitte zugewandt und von diesem, insbesondere durch einen Schlitz (44), beabstandet ist.

12. Schellenanordnung (2) nach einem der vorhergehenden Ansprüche, **dadurch gekennzeichnet, dass** ein Einsatzteil koaxial in das Schellenband (10) eingesetzt ist, wobei das Einsatzteil als ringförmiges Band ausgebildet ist, und wobei die Laschen (22) in Radialrichtung R federwirkend zwischen dem Schellenband (10) und dem Einsatzteil angeordnet sind.

13. Schellenanordnung (2) nach dem vorhergehenden Anspruch, **dadurch gekennzeichnet, dass** die Lasche (22) jeweils einen Ringraum (56) durchquerend ausgestaltet sind, der zwischen dem Schellenband (10) und den Einsatzteil ausgebildet ist.

14. Schellenanordnung (2) nach einem der vorhergehenden Ansprüche, **dadurch gekennzeichnet, dass** das Schellenband (10) und bzw. oder das Einsatzteil) aus Metall, insbesondere Federstahl, sind.

15. Verbindungsanordnung, umfassend
- ein Rohr oder Stutzen mit einem Rohr- bzw. Stutzenendabschnitt und
- ein Schlauch mit einem Schlauchendabschnitt,
- wobei der Schlauchendabschnitt auf den Rohr- bzw. Stutzenendabschnitt aufgesteckt ist,
**dadurch gekennzeichnet, dass**
- der Schlauchendabschnitt mittels einer Schellenanordnung (2) nach einem der vorhergehenden Ansprüche kraftschlüssig auf dem Rohr- bzw. Stutzenendabschnitt befestigt ist.

## Claims

1. Clamp arrangement (2) for fastening a hose to a pipe or a stub, comprising
- a clamp (8) having an annular clamp band (10) and a clamp band-tensioning unit (12), wherein the clamp (8) forms a receiving opening (14) for the hose and the pipe or the stub, and
- a plurality of springs (18) which are distributed over a circumference of the clamp band (10), project from the clamp band (10) into the receiving opening (14) and are spring-acting in the radial direction R of the clamp band (10),
- wherein the springs (18) are formed by tongues (22), **characterized in that**
- two adjacent tongues (22) are arranged so as to be offset in the circumferential direction U of the clamp band (10) and to overlap in the axial direction A of the clamp band (10).

2. Clamp arrangement (2) according to claim 1, **characterized in that** the in each case two adjacent tongues (22) are adjacent in the axial direction A of the clamp band (10).

3. Clamp arrangement (2) according to one of the preceding claims, **characterized in that** the tongues (22) are configured to be convex in the radial direction R of the clamp band (10).

4. Clamp arrangement (2) according to one of the preceding claims, **characterized in that** a minimum spacing M between two tongues (22) overlapping in the axial direction A is less than a quarter, in particular less than a fifth, of an average width B of the clamp band (10).

5. Clamp arrangement (2) according to one of the preceding claims, **characterized in that** a web (24) formed by the clamp band (10) extends between two tongues (22) overlapping in the axial direction A.

6. Clamp arrangement (2) according to one of the preceding claims, **characterized in that** each of the tongues (22) is connected to the clamp band (10) by two end portions (26, 28) of the tongue (22) that are arranged opposite one another.

7. Clamp arrangement (2) according to the preceding claim, **characterized in that** each tongue (22) has a longitudinal axis L which extends between the end portions (26, 28) of the respective tongue (22), and each of the longitudinal axes L is oriented obliquely to a circumferential direction U of the clamp band (10).

8. Clamp arrangement (2) according to either of the preceding Claims 6 and 7, **characterized in that** each of the tongues (22) has two outer edges (30) which each extend between the end portions (26, 28) of the tongue.

9. Clamp arrangement (2) according to the preceding claim, **characterized in that** at least one of the outer edges (30) of each tongue (22) is tapered.

10. Clamp arrangement (2) according to one of the preceding claims, **characterized in that** the clamp band (10) is formed at each end side (40) by an uninterrupted ring portion (42).

11. Clamp arrangement (2) according to the preceding claim, **characterized in that** each of the outer edges (30) of a tongue (22) faces one of the ring portions (42) and is spaced apart therefrom, in particular by a slot (44).

12. Clamp arrangement (2) according to one of the preceding claims, **characterized in that** an insert part is inserted coaxially into the clamp band (10), wherein the insert part is designed as an annular band, and wherein the tongues (22) are arranged in the radial direction R in a spring-acting manner between the clamp band (10) and the insert part.

13. Clamp arrangement (2) according to the preceding claim, **characterized in that** the tongues (22) are each designed to cross through an annular space (56) which is formed between the clamp band (10) and the insert part.

14. Clamp arrangement (2) according to one of the preceding claims, **characterized in that** the clamp band (10) and/or the insert part are or is made of metal, in particular spring steel.

15. Connection arrangement, comprising
- a pipe or stub having a pipe or stub end portion and
- a hose having a hose end portion,
- wherein the hose end portion is plugged onto the pipe or stub end portion,
**characterized in that**
- the hose end portion is fastened to the pipe or stub end portion in a force-fitting manner by means of a clamp arrangement (2) according to one of the preceding claims.

## Revendications

1. Système de collier (2) pour la fixation d'un tuyau souple sur un tube ou un manchon, comprenant
- un collier (8) avec une bande de collier annulaire (10) et une unité de serrage de la bande de collier (12), dans lequel le collier (8) forme une ouverture de réception (14) pour le tuyau souple et le tube ou le manchon, et
- plusieurs ressorts (18) répartis sur la périphérie de la bande de collier (10), qui pénètrent dans l'ouverture de réception (14) à partir de la bande de collier (10) et qui ont une action de ressort dans la direction radiale R de la bande de collier (10),
- dans lequel les ressorts (18) sont formés par des lamelles (22),
**caractérisé en ce que**
- deux lamelles voisines (22) sont disposées de façon décalée dans la direction périphérique U de la bande de collier (10) et avec recouvrement dans la direction axiale A de la bande de collier (10).

2. Système de collier (2) selon la revendication 1, **caractérisé en ce que** les deux lamelles voisines respectives (22) sont voisines dans la direction axiale A de la bande de collier (10).

3. Système de collier (2) selon l'une quelconque des revendications précédentes, **caractérisé en ce que** les lamelles (22) sont de forme bombée dans la direction radiale R de la bande de collier (22).

4. Système de collier (2) selon l'une quelconque des revendications précédentes, **caractérisé en ce qu'**une distance minimale M de deux lamelles (22) se recouvrant en direction axiale A est plus petite qu'un quart, en particulier plus petite qu'un cinquième, d'une largeur moyenne B de la bande de collier (10).

5. Système de collier (2) selon l'une quelconque des revendications précédentes, **caractérisé en ce qu'**une nervure (24) formée par la bande de collier (10) s'étend entre deux lamelles (22) se recouvrant en direction axiale A.

6. Système de collier (2) selon l'une quelconque des revendications précédentes, **caractérisé en ce que** chacune des lamelles (22) est reliée à la bande de collier (10) par deux parties d'extrémité (26, 28) de la lamelle (22) disposées en face l'une de l'autre.

7. Système de collier (2) selon la revendication précédente, **caractérisé en ce que** chaque lamelle (22) présente un axe longitudinal L, qui s'étend entre les parties d'extrémité (26, 28) de la lamelle respective (22), et chacun des axes longitudinaux L est orienté en oblique par rapport à unea direction périphérique U de la bande de collier (10).

8. Système de collier (2) selon l'une quelconque des revendications précédentes 6 ou 7, **caractérisé en ce que** chacune des lamelles (22) présente deux côtés extérieurs (30), qui s'étendent respectivement entre les parties d'extrémité (26, 28) de la lamelle.

9. Système de collier (2) selon la revendication précédente, **caractérisé en ce qu'**au moins un des côtés extérieurs (30) de chaque lamelle (22) est doté d'une taille.

10. Système de collier (2) selon l'une quelconque des revendications précédentes, **caractérisé en ce que** la bande de collier (10) est formée vers chaque côté frontal (40) par une partie annulaire interrompue (42).

11. Système de collier (2) selon la revendication précédente, **caractérisé en ce que** chacun des côtés extérieurs (30) d'une lamelle (22) est tourné vers une des parties annulaires (42) et est espacé de celle-ci, en particulier par une fente (44).

12. Système de collier (2) selon l'une quelconque des revendications précédentes, **caractérisé en ce qu'**une pièce d'insertion est introduite coaxialement dans la bande de collier (10), dans lequel la pièce d'insertion est réalisée en forme de bande annulaire, et dans lequel les lamelles (22) sont disposées avec une action de ressort en direction radiale R entre la bande de collier (10) et la pièce d'insertion.

13. Système de collier (2) selon la revendication précédente, **caractérisé en ce que** les lamelles (22) sont configurées de façon à traverser respectivement un espace annulaire (56), qui est formé entre la bande de collier (10) et la pièce d'insertion.

14. Système de collier (2) selon l'une quelconque des revendications précédentes, **caractérisé en ce que** la bande de collier (10) et/ou la pièce d'insertion sont en métal, en particulier en acier à ressort.

15. Système d'assemblage, comprenant
- un tube ou un manchon avec une partie d'extrémité de tube ou de manchon, et
- un tuyau souple avec une partie d'extrémité de tuyau souple,
- dans lequel la partie d'extrémité de tuyau souple est engagée sur la partie d'extrémité de tube ou de manchon,
**caractérisé en ce que**
- la partie d'extrémité de tuyau souple est fixée par adhérence sur la partie d'extrémité de tube ou de manchon au moyen d'un système de collier (2) selon l'une quelconque des revendications précédentes.
